# EUROPEAN PATENT APPLICATION

(11) **EP 4 741 320 A1**
(43) Date of publication of application: **13.05.2026**
(21) Application number: 24212412.1
(22) Date of filing: 12.11.2024
(51) Int. Cl.: B65G 23/23, B65G 54/02, H02K 41/03, B65G 43/02, B65G 37/00, B65G 35/06

(54) **TRANSPORT SYSTEM**

(71) Applicant: ABB Schweiz AG, 5400 Baden (CH)
(72) Inventor: Rovelli, Dario, 24030 Valbrembo (IT)
(74) Representative: Patentanwälte Pinter & Weiss OG

(57) **Abstract**

The invention relates to an electromagnetic transport system (1), either in the form of a long stator linear motor or in the form of a planar motor, with a stationary part or a stator (2) consisting of at least two or more stator segments (21, 22, 2i) and with at least one moveable part or shuttle (3, 3i), which is moveable relative to the stator (2) along a transport path. A magnet unit (4, 4i) is arranged on the at least one shuttle (3, 3i), which interacts electromagnetically with magnetic elements arranged on the stator (2) to move the shuttle (3, 3i) in at least one direction (T) of movement along the transport path. To increase operational safety and enhanced safety function, in particular Safe motion functionality to provide user interaction in a simple and cost-efficient way, the transport system (1) comprises at least one conventional transport device (5, 5i) replacing at least one of stator segments (2i) along the transport path, wherein the at least one shuttle (3) can be moved from a stator segment (21) to the conventional transport device (5, 5i) and from the conventional transport device (5, 5i) to another stator segment (22), wherein the at least one conventional transport device (5, 5i) at least comprises a drive unit (6) and conveying means (7), wherein the drive unit (6) drives and controls the conveying means (7) using safety functions to meet predefined safety requirements, wherein, wherever the conventional transport device (5, 5i) replaces at least one stator segment (2i), the conveying means (7) interacts with the at least one shuttle (3) in such a way that the at least one shuttle (3) is moved along with a movement of the conveying means (7), whereby the safety functions can be applied to the at least one shuttle (3).

## Description

### TECHNICAL FIELD OF THE INVENTION

The present invention relates generally to the field of plant engineering, in particular to the field of automation technology. The present invention relates to an electromagnetic transport system comprising a stationary part or a stator consisting of at least two or more stator segments and at least one moveable part or shuttle, which is moveable relative to the stator along a transport path, wherein a magnet unit is arranged on the at least one shuttle, and wherein the magnet unit of the at least one shuttle interacts electromagnetically with magnetic elements being arranged on the stator to move the shuttle in at least one direction of movement along the transport path.

### BACKGROUND INFORMATION

Nowadays, in most of the modern manufacturing and production facilities, it is necessary to move components, workpieces, products, etc. between the individual handling and production stations using transport equipment. Various transport and conveying devices, are used for the transport of the components, workpieces, products, etc. Traditional transport systems like e.g., continuous conveyors, chain conveyors or conveyor belts in different designs can be used to transport and/or convey components, products, or workpieces. These traditional transport systems usually convert a rotary movement of an electric drive into a linear movement of e.g. a chain, belt, etc. However, the flexibility of traditional transport systems is considerably limited, especially the individual transport of single transport units is not possible. So, electromagnetic transport systems in the form of long stator linear motors (or short: LLM) and/or in the form of planar motors (short: PM) become more frequently used to meet the requirements of modern and flexible transport equipment in manufacturing and production facilities.

Long stator linear motors and planar motors as well as their applications and their mode of operation are well known from the state of the art. Both motors - a long stator linear motor and a planar motor - comprise at least one movable part, which is also referred to as transport unit or shuttle, and a fixed part (the stator), with respect to which the at least one shuttle is moved due to interacting magnet fields in at least one direction of movement. For this purpose, a magnet unit, which comprises either electromagnets or permanent magnets, is arranged on one of the parts, e.g., the shuttle. The magnet unit interacts with the magnetic field generated by magnetic elements, e.g. energized drive coils, on the other part (e.g. the stator) to generate a propulsive force. If a voltage is applied to the drive coils, a magnetic field is generated, which interacts with the magnetic field of the magnet unit, thereby generating a force, which moves the shuttle. A moving magnetic field is generated by appropriate control of energizing the drive coils to move the shuttle along a predefined path along a transport track or within a transport plane.

A long stator linear motor generally comprises a fixed part or stator, which is usually consists of many stator segments. The drive coils are usually arranged in fixed positions to each other on the stator or on the stator segments. The stator segments can have different geometries (e.g., straight lines, curves, track switches, etc.) and can be assembled into a desired stator by lining them up accordingly. The stator or several stator segments then form the transport track or transport path, along which at least one shuttle, usually several shuttles, is moved. For this purpose, several drive magnets building the magnet unit are arranged on the shuttle, wherein the magnetic field of the magnet unit interact with the electromagnetic field generated by energizing the drive coils of the stator. LLMs are known, for example, from WO 2013/143783 A1 or US2013/0074724 A1.

Planar motors, which are used, for example, in production processes or transport processes requiring complex motion profiles, also have a stator like long stator linear motors. However, the stator or stator segments of the planar motor form a transport plane, in which one or more shuttles can be moved at least two-dimensionally. The drive coils of the planar motor are therefore arranged in the transport plane, in some embodiments also in several planes. A drive force, acting on the shuttle, is generated to move the shuttle e.g., along a transport path within the transport plane. For this purpose, a magnetic field, which is generated e.g., by the magnet unit of the shuttle, interacts with a magnetic field of the stator generated by energizing the drive coils accordingly. US 9,202,719 B2 or WO 2019/129576 A1, for example, disclose the basic structure and mode of operation of a planar motor.

Since the basic motor principle of a long stator linear motor or of a planar motor is well known, so there is no need to go into further details here.

Electromagnetic transport systems are nowadays more and more used in production lines, wherein the shuttles of the transport system are mainly used to move different objects (e.g., loads, components, products, workpieces, or packaging units like e.g., bottles, containers, etc.) between the different work stations of a production line. In the work stations many handling interactions on the objects transported by the shuttles may be carried out, mainly by robots, for example, but certain handling interactions, like e.g. manual assembly of products or workpieces, product inspection, manual product loading, etc., require the interaction of a user. Since the shuttles move along the transport path provided by the stator or stator segments of the transport system with high speed, high forces and/or high torques having very little friction, they may pose a high risk of injury to an individual getting close to an electromagnetic transport system. So, safety areas can be defined and, if a user enters a predefined safety area, it is necessary to ensure that, the moving shuttles do not pose a risk and that the user is protected from injury.

Electromagnetic transport systems are therefore often enclosed by enclosures like e.g. protective grids, housings, etc. to prevent unintentional, unforeseeable, or even unauthorized access by individuals. However, even with enclosed electromagnetic transport systems, it may be necessary for users to have access to the electromagnetic transport system, when carrying out set-up work and/or maintenance work, for example. So, often the enclosures have protective doors to provide access.

A particularly significant disadvantage, however, is that these protective doors override the actual protection provided by the enclosure, which means that opening a corresponding protective door again creates a high risk of injury to an individual. In case a user is opening the protective door, safety circuits implemented in the transport system may de- energize the transport system leading to a stop of all the shuttles and to an interruption of the production. Furthermore, such an enclosure may lead to an increased requirement of space for the transport system, more components are needed and thus the costs for the construction and implementation of the electromagnetic transport system increase.

Certain basic safety functions can also be implemented for the electromagnetic transport system to meet certain safety requirements. Safety functions or safety-relevant functions (in the sense of functional safety) are usually functions of a drive unit of an automation system, like e.g. an electromagnetic transport system. The safety functions implemented in drive units or the drive system of an automation system shall ensure safe operation and prevent damage of persons and machines and may be summarized as Safe motion functionality. "Safety" and "safe" in this context refers always to a functional safety or certainty with which it is to be made sure that a certain function can be ensured with sufficient reliability, depending on the relevant safety requirements imposed. Depending on the type and use of the automation systems, these requirements may be assigned to corresponding safety requirement levels (e.g., a safety integrity level (SIL)), each of which differs in the safety requirements imposed. Definitions of said requirements can be found in the international IEC 61508 series of standard, wherein IEC 61508 defines (functional) safety as a "part of the overall safety relating to the EUC (Equipment Under Control) and the EUC control system which depends on the correct functioning of the E/E/PE safety-related systems, other technology safety-related systems and external risk reduction facilities." The fundamental concept is that any safety-related system must work correctly or must only fail in a predictable (safe) way.

One of the most common safety functions, usually implemented in electromagnetic transport systems, is safe pulse inhibition, which is also designated as a "Safe Torque Off function" or "STO function". The object of an STO function is to switch an electric drive without torque. The aim is that the electric drive does not continue to receive any current, which could lead to a rotatory motion. The STO function thus ensures that no torque-forming current can continue to act on the electric drive, and that a continuous rotatory motion or an undesired start-up is prevented. Of course, this also applies in an analogous manner for driving linear motors and the linear movement thereof. Implementing, for example, the STO function, with an electromagnetic transport system, requires safely interrupting the energy supply e.g. of the drive coils of the stator or at least one stator segment in the event of a failure or danger. The shuttles moving on the stator or the respective stator segment will stop moving due to the missing energy supply of the drive coils.

In addition or as an alternative to an enclosure, basic safety functions like the STO function can be implemented in the electromagnetic transport system, in particular in control units of the system. The STO function can be triggered, if a user or unauthorized person enters the safety area of the electromagnetic transport system or in case a user interaction with the electromagnetic system is necessary, for example. However, since the shuttles have very high torques with very little friction, the system-internal braking properties are very low in the case of an energy release, like the STO function, this results in long braking distances, uncontrollable stopping position of the shuttles and possibly uncontrollable movements by shuttles before stopping, which pose a danger of injury to a person. Furthermore, if the energy supply of the electromagnetic transport system or at least of parts of it must be switch off to provide user interaction, especially with individual shuttles, this may also lead to a reduction in productivity of the electromagnetic transport system and the whole production line it is used.

### SUMMARY

Against this background, the present invention is based on the task to provide an electromagnetic transport system, especially in the form of a long stator linear motor and/or planar motor, which provides increased operational safety and enhanced safety functions, especially to provide user interaction, in a simple and cost-efficient way.

These and other objectives are solved by an electromagnetic transport system according to the independent claim. Advantageous embodiments of the present invention are described by the dependent claims.

According to the invention, these and other objectives are achieved by an electromagnetic transport system with a stationary part or a stator consisting of at least two or more stator segments and with at least one moveable part or shuttle which is moveable relative to the stator along a transport path, wherein a magnet unit is arranged on the at least one shuttle, and wherein the magnet unit of the at least one shuttle interacts electromagnetically with magnetic elements arranged on the stator to move the shuttle in at least one direction of movement along the transport path. The transport system comprises at least one conventional transport device replacing at least one of stator segments along the transport path, wherein the at least one conventional transport device at least comprises a drive unit and conveying means, wherein the drive unit drives and controls the conveying means using safety functions to fulfill predefined safety requirements and wherein, wherever the conventional transport device replaces at least one stator segment, the conveying means of the conventional transport device interacts with the at least one shuttle in such a way that the at least one shuttle is moved along with a movement of the conveying means, whereby the safety functions can be applied to the at least one shuttle and the energy deliverable by the at least one shuttle is limited.

The main aspect of the present invention is that Safe motion functionality is provided by an electromagnetic transport system as the safety functions implemented in the conventional transport device, in particular in the drive unit can be applied to the shuttle. Safe motion functionality summarizes safety functions or safety-relevant function (in the sense of functional safety) that ensure safe operation and prevent damage of persons and machines and thus fulfill predefined safety requirements. This allows a user to interact - at least in the area of the conventional transport system - with the electromagnetic transport system, in particular with the individual shuttles. For a user may carried out required interactions, like e.g. manual assembly of products or workpieces, product inspection, manual product loading, etc., without stopping the operation of the shuttles. This increases the productivity of the transport system, while still maintaining high safety standards. Additionally, it is possible to do without enclosure or protective grids, especially in areas of the transport system, where stator segments are replaced by conventional transport devices. This reduces the costs for the construction and implementation of the electromagnetic transport system.

In a preferred embodiment, the conveying means of the conventional transport device comprises ferromagnetic material, which interacts with the magnet unit of the at least one shuttle to generate a magnetic attraction force. The ferromagnetic material may be designed as ferromagnetic elements, which are embedded in the conveying means.

It is advantageous, if the at least one shuttle interacts with the conveying means due to friction and/or the magnetic attraction force generated between the ferromagnetic material and the magnet unit of the at least one shuttle. In case there is a contact between the shuttle and the conveying means, after the shuttle was moved to the conventional transport device, the shuttle can adapt to the movement of the conveying means (e.g. speed, direction of movement, etc.) quite easily because of the friction, which acts between the shuttle and the conveying means. If the conveying means has ferromagnetic material embedded, then the magnetic attraction force generated between the ferromagnetic material and the magnet unit of the shuttle additionally supports the interaction, and the safety functions can be applied to the shuttle more quickly.

Alternatively, the least one shuttle may interact with the conveying means only due to the magnetic attraction force generated between the ferromagnetic material and the magnet unit of the at least one shuttle. This is particularly the case if, for example, there is no contact between the conveying means and the shuttle due to guide elements on the shuttle and/or route guide elements arranged along the stator of the transport system that are not interrupted in the area of the conventional transport device. The magnetic attraction force generated between the ferromagnetic material and the magnet unit of the at least one shuttle has the effect that the shuttle can interact with the conveying means and e.g. adapt to the movement of the conveying means (e.g. speed, direction of movement, etc.) to also apply the safety functions implemented in the conventional transport system to the shuttle. So, the combined use of the magnetic attraction force generated between the ferromagnetic material and the magnet unit of the at least one shuttle and Safe motion functionality of the drive unit of the conventional transport device even can be used, if there is no contact between the shuttle and the conveying means.

In a preferred embodiment the conventional transport system is designed as a continuous conveyor, in particular as belt-conveyor or chain-conveyor. A continuous conveyor can easily replace the at least one stator segment and is thus easy to integrate into an electromagnetic transport system. Furthermore, continuous conveyors may comprise drive units which have safety functions implemented providing Safe motion functionality. Ideally, the conveying means is designed as conveyor belt or conveyor chain, in particular as modular conveyor belt or conveyor chain made of plastic. The ferromagnetic material can be easily embedded with a plastic conveyor belt. If the conveyor belt is designed as modular plastic conveyor belt, the ferromagnetic material designed as ferromagnetic elements can be embedded in the modules, which form the conveyor belt.

In a preferred embodiment of the electromagnetic transport system the safety functions, implemented in the drive unit of the conventional transport device and applicable to the shuttle, fulfill safety requirements specified in the international IEC 61508 series of standard. Thus, it is ensured that these requirements may be assigned to corresponding safety requirement levels (e.g., a safety integrity level (SIL)) and that the electromagnetic transport system works correctly or only fails in a predictable (safe) way - in the area, where user interaction is carried out.

Furthermore, it is advantageous, if the safety functions implemented in the drive unit of the conventional transport device comprises safety functions specified in the standard IEC 61800-5-2:2016 including at least safety functions like as Safe Torque Off (STO), Safe Limited Speed (SLS), Safe Direction (SD), Safe Limited Torque (SLT) and Safe Limited Acceleration (SLA). Further safety functions specified by the IEC 61800-5-2:2016 include functions like e.g. Safe Stop 1 (SS1), Safe Stop 2 (SS2), Safe Operation Stop (SOS), Save Speed Monitor (SSM), Safe Speed Range (SSR), Safe Limited Position (SLP), Safe Position (SP) or Safe Brake Control, Safe Brake Test (SBC, SBT). One or more of these safety functions may also be implemented in the drive unit and therefore applicable to the shuttle. All these safety functions are provided to ensure safe operation of electrical drive units and prevent damage to personnel and machines. Depending on the use of the drive units, these may be assigned to different safety requirement levels and fewer, more or possibly different safety requirements may be placed on them.

Additionally, the electromagnetic transport system is designed as a long stator linear motor and/or planar motor. Both, long stator linear motors and planar motors are often used in production lines and can also provide user interaction in defined areas due to the invention.

### BRIEF DESCRIPTION OF THE DRAWINGS

The present invention is described below in greater detail with reference to Figs.1 to 3b, which show schematic and non-limiting advantageous embodiments of the invention by way of example. In the drawings:
Fig. 1 shows an electromagnetic transport system in the form of long stator linear motor according to the invention having safety functions from a top view perspective;
Fig. 2 shows an electromagnetic transport system in the form of planar motor according to the invention having safety functions from a top view perspective;
Fig. 3a shows a possible interaction of a shuttle of the electromagnetic transport system according to the invention and a conveying means of the conventional transport device;
Fig. 3b shows another possible interaction of a shuttle of the electromagnetic transport system according to the invention and a conveying means of the conventional transport device.

### DETAILED DESCRIPTION

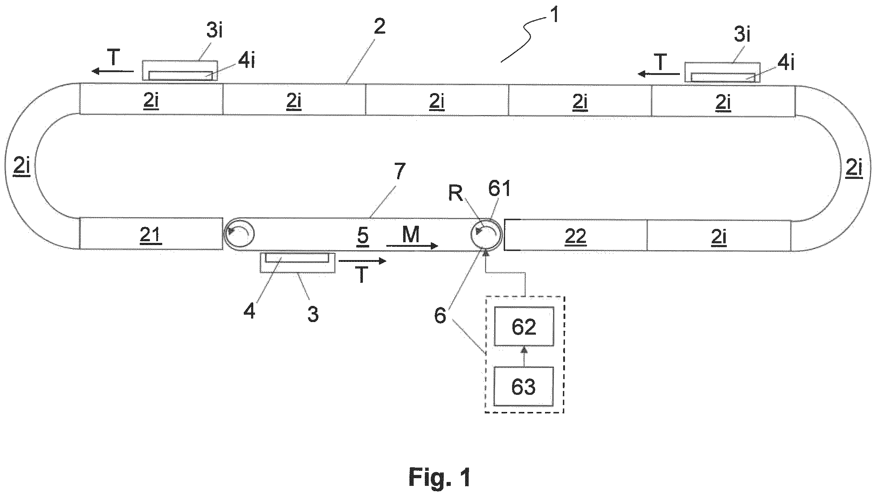

Fig. 1 shows an electromagnetic transport system 1 in the form of a long stator linear motor (short LLM), for example. The electromagnetic transport system 1 comprises a fixed part 2 or stator 2 and at least on moveable part 3, 3i or shuttle 3, 3i. The stator 2 usually consists of at least two, normally numerous stator segments 21, 22, 2i. The movable parts 3, 3i or shuttles 3, 3i can be moved with respect to the (fixed) stator 2 due to interacting magnet fields. For this purpose, drive coils are arranged on the stator 2, which are not shown in Fig. 1. In case of an electromagnetic transport system 1 in the form of a long stator linear motor (as shown in Fig. 1), the drive coils are arranged next to one another in a direction T of movement of the individual shuttles 3, 3i. The stator 2 forms the transport track and thus predefines the transport path, along which the shuttles 3, 3i can be moved in the direction T of movement, for example. In Fig.1 the transport path predefined by the stator 2 or the stator segments 21, 22, 2i is in the form of a closed transport path, for example. Furthermore, the electromagnetic transport system 1 in the form of a LLM may have route guide elements 9 (not shown in Fig. 1), which interact with guide elements 10 (not shown in Fig. 1) of the shuttles 3, 3i. The guide elements 10 of the shuttles 3, 3i can be designed as rollers, wheels, sliding elements, guiding surfaces, or sliding surfaces, etc., whereby the route guiding elements 9 have to be designed in such a way that the respective guide elements 10 can be guided therein.

Each shuttle 3, 3i comprises a magnet unit 4, 4i with a plurality of drive magnets. If the drive coils of the stator 2 are energized in the range of an individual shuttle 3i (by application of an electrical voltage), e.g., under the control of a control unit (not shown in Figure 1), a drive magnetic field is generated, which interacts with the magnetic field of the magnet unit 4i of the individual shuttle 3i. Thus, a propulsive force is generated, which drives the individual shuttle 3i and moves it along the predefined transport path formed by the stator 2 or the stator segments 2i. Usually, permanent magnets are used as drive magnets of the shuttle 3, 3i, but it is also possible to use electromagnets. In the case of electromagnets used as drive magnets, permanent magnets could be provided on the fixed part 2 of the transport system 1 instead of drive coils 4. Since the motor principle of long stator linear motors is well known, it will not discuss in detail here.

Furthermore, the embodiment of an electromagnetic transport 1 or LLM, as exemplary shown in the Fig. 1, comprises at least one conventional transport device 5, which replaces at least one stator segment 2i. The conventional transport device 5 is, for example, arranged between a first stator segment 21 and a second stator segment 22 of the predefined transport path. If a shuttle 3, 3i is moving along the transport path of the transport system 1, the shuttle 3, for example, is transferred from the first stator segment 21 to the conventional transport device 5 and from the conventional transport device 5 to the second stator segment 22, for example, depending on the direction T of movement of the shuttles 3, 3i on the stator 2. I.e., that in between the two stator segments the exemplary shuttle 3 is moved by the conventional transport device 5.

The conventional transport device 5 at least comprises a drive unit 6 or drive system 6 and a conveying means 7. The drive unit 6 or drive system 6 drives and controls the conveying means 7. Therefore, the drive unit 6 may comprise a drive element 61 as well as a motor unit 62 (e.g. an electric motor) coupled to the drive element 61 e.g. by a drive shaft to generate a rotatory motion R of the drive element 61 and thus move the conveying means 7 linearly in a direction M of movement. So, a rotatory motion R of drive shaft and a drive element 61 driven by the motor unit 62 is converted to a linear movement M of the conveying means 7. Furthermore, the drive unit 6 may comprise a control unit 63, which monitors and controls the motor unit 62 and by doing so also monitors and controls the movement M of the conveying means 7.

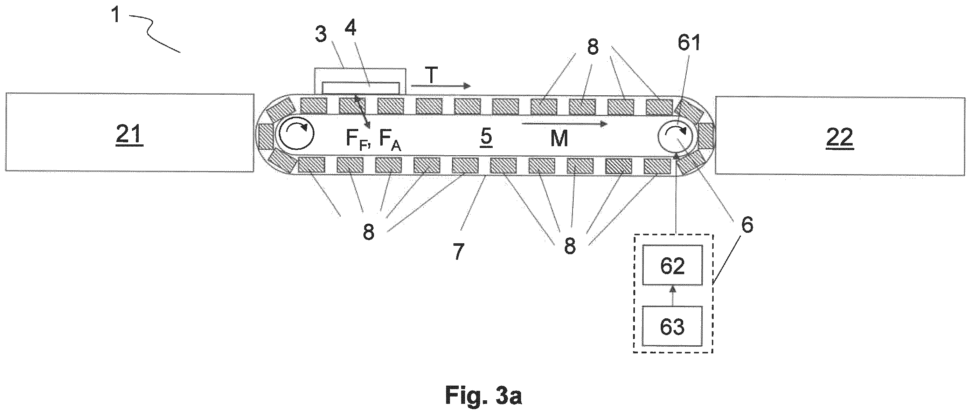

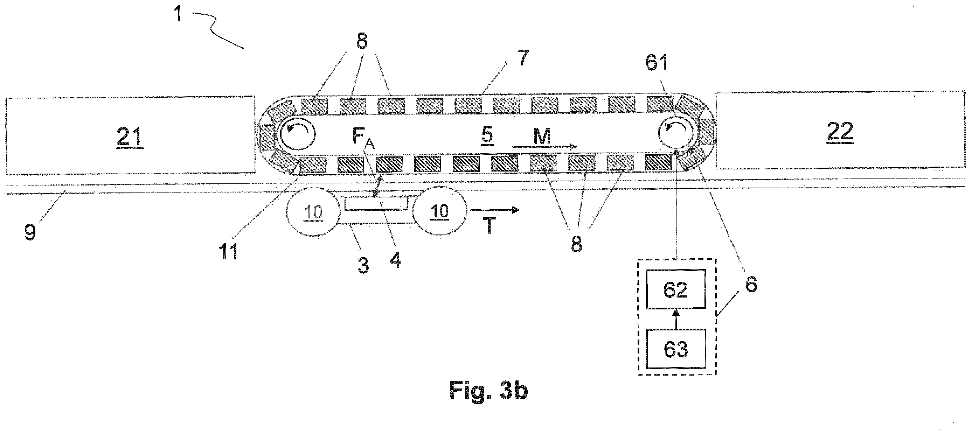

The conventional transport device 5 is designed as continuous conveyor or a belt-conveyor, for example. The conveying means 7 are e.g., a conveyor belt or a conveyor chain, which is made of plastic. In particular, the conveying means 7 may be consists of linked modules, forming the conveyor belt or chain to move the shuttle 3. In a preferred embodiment, the conveying means 7 may also comprise ferromagnetic material 8 (e.g., steel, iron, cobalt, nickel, etc.). The ferromagnetic material 8 may be embedded in the conveying means 7, for example. If the conveying means 7 consists of linked plastic modules, the ferromagnetic material 8 may be designed in the form of ferro magnetic elements 8, which are embedded in the modules of the conveying means 7 - as exemplary shown in Figs. 3a and 3b.

The drive unit 6 has safety functions implemented, which are usually monitored and carried out by the control unit 63 and which may trigger defined actions, e.g. issue a warning, transfer the system to safe operation state, reduce or limit motor speed, stop the energy supply or system in a controlled way, etc. These safety functions are used that the conventional transport device 5, mainly the movement of the conveying means 7, meets the predefined safety requirements to ensure safe operation of the transport device 5 and prevent damage of persons and machines. The set of safety functions implemented may be summarized as Safe motion functionality. "Safety" and "safe" in this context refers always to functional safety or certainty with which it should be ensured that a certain function can be guaranteed with sufficient reliability, depending on the relevant safety requirements imposed. These requirements may be assigned to corresponding safety requirement levels (e.g., a safety integrity level (SIL)), each of which differs in the safety requirements imposed. Definitions of said requirements can be found in the international IEC 61508 series of standard, for example. So, the drive unit 6 or drive system 6 of the conventional transport device 5 must have certain safety functions integrated to meet the predefined safety requirements and to provide Safe motion functionality. Safety functions which may be implemented or integrated in the drive unit 6, in particular in the control unit 63 of the drive unit 6, are specified, for example, in the standard IEC 61800-5-2:2016 including safety functions like as Safe Torque Off (STO), Safe Limited Speed (SLS), Safe Direction (SD), Safe Limited Torque (SLT), Safe Limited Acceleration (SLA), etc., to provide safe operation and motion of the conveying means 7, which also allows user interaction, whereby enclosures or protective grid are no longer necessary in area of the conventional transport device 5. SLS, for example, is a safety function used to monitor the defined speed limit e.g. of the drive and/or the conveying means is observed and triggers a predefined action like transferring the system to safe operation state or stopping the system in a safe way in the event of failure. SLT, for example, is an often-used safety function, which shall prevent that a drive does not exceed a predefined torque or in case of an electromagnetic transport system 1 based on a linear motor a specified force. SD, for example, ensures that the drive can only move in a defined direction and may trigger a predefined action like transferring the system to safe operation state or stopping the system in a safe way in the event of failure. SLA, for example, is a safety function that prevents, in particular a motor unit 62, from accelerating or decelerating too rapidly and triggers e.g. STO, when the rate of acceleration exceeds a predefined limit. In the standard IEC 61800-5-2:2016, further safety functions are specified like e.g.

During operation of the electromagnetic transport system 1 or the LLM the shuttles 3, 3i move along the transport path from by the stator 2. The shuttle 3 is moved from the first stator segment 21 to the conveying means 7 of the conventional transport device 5 replacing at least one stator segment 2i. At that change over from the first stator segment 21 to the conveying means 7 an interaction between the shuttle 3 and the conveying means 7 of the conventional transport device 5 starts. Possible embodiments of the interaction between the shuttle 3 and the conveyor 7 will be explained in detail later with reference to Fig. 3a and Fig. 3b. The interaction between the shuttle 3 and the conveying means 7 links the shuttle 3 and conveying means 7 to form a unit. The safety functions of conventional transport device 5, implemented or integrated in the drive unit 6, can thus be applied to the shuttle 3, too, and the energy deliverable by the shuttle 3 is limited.

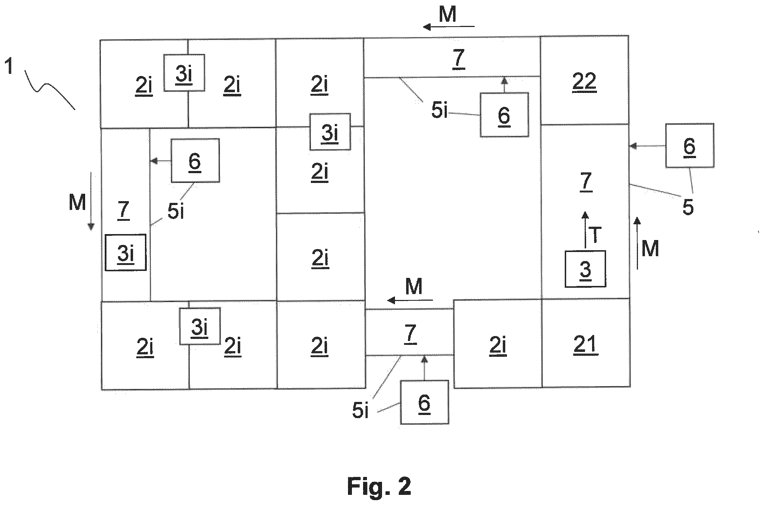

Fig. 2 shows an electromagnetic transport system 1 in the form of a planar motor (short PM), for example, from a top view perspective. The stator 2 of the electromagnetic transport system 1 in the form of a PM comprises at least one stator segment 2i. Usually, the stator 2 comprises two or more stator segments 2i which can be connected in virtually any pattern necessary for the respective application of PM. The stator 2 of the electromagnetic transport system 1 or PM forms a transport plane. In the example shown in Fig. 2, the transport plane is, for example, a horizontal plane. However, other arrangements would of course be possible, too, e.g., vertical and/or arrangements where the transport plane is inclined at a certain angle. Essentially, the arrangement of the transport plane depends on the respective use and a respective area of application of the transport system 1.

At least one shuttle 3, 3i is moved on the transport plane, e.g., two-dimensionally along a transport path due to interacting magnetic fields. For this purpose, the stator 2 comprises magnetic elements like e.g. drive coils, which are arranged in groups in a plane on the stator 2, which define the directions T of movement of the shuttles 3, 3i on the transport plane. Analogous to a transport system 1 in the form of an LLM, each shuttle 3, 3i comprises a magnet unit 4, 4i, which is not visible in Fig. 2 due to the perspective. To move the shuttle 3, 3i on the transport plane along the transport path, the drive coils are energized accordingly, and the magnetic field generated interact with the magnet unit 4, 4i of the respective shuttle 3, 3i in such a way that the shuttle 3, 3i is moved on the transport plane along the transport path which could be defined by energizing the drive coils. Since the motor principle of planar motors is also well known, it will not discuss in detail here.

Furthermore, the embodiment of an electromagnetic transport 1 or PM, as exemplary shown in the Fig. 2, comprises at least one conventional transport device 5, 5i, in particular a continuous conveyor or a belt-conveyor. The at least one conventional transport device 5, 5i replaces at least one stator segment 2i of the PM. In the shown example, there are several conventional transport devices 5, 5i replacing stator segments 2i. These conventional transport devices 5, 5i are arranged between stator segments 21, 22, 2i - e.g., the conventional transport device 5 is arranged between a first stator segment 21 and a second stator segment 22 of the planar motor.

The conventional transport device 5 also comprises a drive unit 6, which drives and controls the conveying means 7. The conveying means 7 may be e.g., a conveyor belt or conveyor chain, and made of plastic. In particular, the conveying means 7 may be modular consisting of linked plastic modules. In a preferred embodiment, the conveying means 7 may also comprise ferromagnetic material 8 (e.g., steel, iron, cobalt, nickel, etc.) embedded in the conveying means 7.

Furthermore, the drive unit 6, which may comprise - as described with Fig. 1 - a drive element 61, a motor unit 62 (e.g. an electric motor) coupled to the drive element 61 by a drive shaft to drive the conveying means 7 linearly in a direction M of movement, has safety functions implemented. The safety functions are used that the conventional transport device 5, mainly the movement of the conveying means 7, meets the predefined safety requirements during operation, which ensure safe operation of the transport device 5 and prevent damage of persons and machines. Like with the electromagnetic transport system 1 in the form of a LLM according to the invention, the electromagnetic transport system 1 in the form of the PM according to the invention also comprises at least one conventional transport device 5 with a drive unit 6 or a drive system 6 that has certain safety functions integrated to meet the predefined safety requirements and thus provides Safe motion functionality. Safety functions which may be implemented or integrated in the drive unit 6, in particular in the control unit 63 of the drive unit 6, may include safety functions like as Safe Torque Off (STO), Safe Limited Speed (SLS), Safe Direction (SD), Safe Limited Torque (SLT), Safe Limited Acceleration (SLA), etc., which are specified, for example, in the standard IEC 61800-5-2:2016. These implemented safety functions provide safe operation and motion of the conveying means 7, which also allows user interaction, whereby enclosures or protective grid are no longer necessary in area of the conventional transport device 5. SLS, for example, like e.g. Safe Stop 1 (SS1), Safe Stop 2 (SS2), Safe Operation Stop (SOS), Save Speed Monitor (SSM), Safe Speed Range (SSR), Safe Limited Position (SLP), Safe Position (SP) or Safe Brake Control, Safe Brake Test (SBC, SBT), which may also be implemented in the drive unit 6, if necessary.

While a shuttle 3, for example, is moving on the transport plane of the transport system 1 along the transport path in the direction T, the shuttle 3 may also be transferred from a first stator segment 21 to the conventional transport device 5 and from the conventional transport device 5 to a second stator segment 22 e.g., due to the movement M of the conventional transport device 5. I.e., that in between the two stator segments the exemplary shuttle 3 is moved by the conventional transport device 5. When the shuttle 3 changes over (e.g. slides onto) to the conveying means 7 of the conventional transport device 5 replacing at least one stator segment 2i, an interaction between the shuttle 3 and the conveying means starts, which links the shuttle 3 and conveying means 7. The shuttle 3 and the conveying means 7 thus form a unit and the safety functions of conventional transport device 5, implemented or integrated in the drive unit 6, can also be applied to the shuttle 3 and the energy deliverable by the shuttle 3 is limited.

Fig. 3a shows exemplary a possible interaction of the shuttle 3 of the electromagnetic transport system 1 and the conveying means 7 of the conventional transport device 5, replacing at least one stator segment 2i. Fig. 3a shows two exemplary stator segments 21, 22 of e.g., either the LLM of Fig. 1 from a top view perspective or the PM of Fig. 2 from a side view perspective. The conventional transport device 5 is arranged between the first and the second stator segment 21, 22. The conventional transport device 5 comprises the drive unit 6 and the conveying means 7. The drive unit 6 comprises, for example, the motor unit 62 to drive the drive element 61 via the drift shaft to drive the conveying means 7 and the control unit 63 to control the movements of the conveying means 7. Furthermore, the drive unit 6 has implemented safety functions fulfilling predefined safety requirements and thus provides Safe motion functionality.

During operation of the transport system 1, the shuttle 3 moves on the stator 2 of the transport system 1 with high speed, high force, and little friction due to an air gap between the stator surface and the shuttle 3 along a transport path in the direction T of movement, for example. The movement of the shuttle 3 is due to the interaction between the magnet unit 4 of the shuttle 3 and the electromagnetic field of the energized drive coils of the stator 2 or stator segment 21, 22. At the change over from the first stator segment 21 to the conventional transport device 5, slides onto the conveying means 7 of conventional transport device 5 and starts to interact with the conveying means 7.

In the simplest embodiment (not shown in Figs. 3a and 3b) the conveying means 7 is only of plastic material. Since there is no electromagnetic field in the conveying means 7, the shuttle 3 interacts with the conveying means because of friction F_{F} between the shuttle 3 and the conveying means 7 in the simplest embodiment. Due to the friction F_{F}, influenced by the coefficient of friction, the shuttle 3 adapts to the movement of the conveying means 7, e.g. in speed, direction M of movements, acceleration, deacceleration, etc., whereby the energy deliverable be the shuttle 3 is limited and the safety functions of the conventional transport device 5 can be applied to the shuttle 3.

The conveyor means may comprise ferromagnetic material 8 (e.g., steel, iron, cobalt, nickel, etc.) in a preferred embodiment of the invention. The ferromagnetic material 8 may be embedded in the conveying means 7, for example. If the conveying means 7 consists of linked plastic modules, the ferromagnetic material 8 may be designed in the form of ferro magnetic elements 8, which are embedded in the modules of the conveying means 7 - as exemplary shown in Figs. 3a and 3b.

When the shuttle 3 slides onto the conveying means 7, the shuttle 3 does not only interact with the conveying means 7 due to the friction F_{F}, but also due to a magnetic attraction force F_{A}. The magnetic attraction force F_{A} results from temporary induced magnetization of the ferromagnetic material 8 of the conveying means 8 due to the magnets of the magnet unit 4 of the shuttle 3. The interaction between the shuttle 3 and the conveying means 7 is therefore a combination of friction F_{F} and the magnetic attraction force F_{A} between the shuttle 3 and the conveying means 7, which have the effect that the shuttle 3 adapts to the movement of the conveying means 7, e.g. in speed, direction M of movements, acceleration, deacceleration, etc., wherein the movement of the conveying means 7 (e.g. speed, acceleration, deacceleration, direction M of movement, etc.) is defined be the rotatory motion R of drive element 61 driven by the motor unit 62 of the drive unit 6 and controlled by the control unit 63 of the drive unit 6. Since the shuttle 3 and conveying means 7 are linked by their interaction due to friction F_{F} and the magnetic attraction force F_{A}, the safety functions of conventional transport device 5, implemented or integrated in the drive unit 6, can also be applied to the shuttle 3 and the energy deliverable by the shuttle 3 is limited. So, the interaction between the shuttle and the conveying means 7 of the conventional transport device 5 provides Safe motion functionality of the shuttle 3. I.e., the shuttle 3 also meets the predefined safety requirements, which ensure safe operation and make user interaction with the shuttle 3 possible during the operation of the electromagnetic transport system 1. For example, a user may carry out handling operation like manual loading or unloading the shuttle 3, manual assembly of objects transported by the shuttle 3, product inspection, etc., for example, with the shuttle 3 still moving.

Fig. 3b shows exemplary another possible interaction of the shuttle 3 of the electromagnetic transport system 1 and the conveying means 7 of the conventional transport device 5, replacing at least one stator segment 2i. In Fig. 3b a section, comprising two exemplary stator segments 21, 22 of an electromagnetic transport system 1 in the form of a LLM as shown in Fig. 1, is shown in the top view perspective, for example. The transport system 1 comprises route guide elements 9, which are also provided, for example, in the area of the conventional transport device 5. The route guide elements 9 interact with guide elements 10 of the shuttle 3. The guide elements 10 of the shuttles 3, 3i can be designed as rollers, wheels, sliding elements, guiding surfaces, or sliding surfaces, etc., whereby the route guiding elements 9 have to be designed in such a way that the respective guide elements 10 can be guided therein.

The conventional transport device 5 is arranged between the first and the second stator segment 21, 22, as also shown in Fig. 3a. The conventional transport device 5 comprises the conveying means 7 and the drive unit 6 comprising, for example, the motor unit 62 to drive the drive element 61 via the drift shaft to drive the conveying means 7 and the control unit 63 to control the movements of the conveying means 7. Furthermore, the drive unit 6 has implemented safety functions fulfilling predefined safety requirements and thus provides Safe motion functionality.

Due to the route guide element 9 and the guide elements 10 of the shuttle 3, the shuttle 3 does not get in contact with the conveying means 7, when it is moved from the first stator segment 21 to the conventional transport device 5. I.e., there is a gap 11 between the shuttle 3 and the conveying means 7, which gap 11 is determined by the route guide element 9 and the guide elements 10 of the shuttle 3, for example. Since the conveyor means comprises comprise ferromagnetic material 8 (e.g., steel, iron, cobalt, nickel, etc.), a magnetic attraction force F_{A}, which results from temporary induced magnetization of the ferromagnetic material 8 of the conveying means 8 due to the magnets of the magnet unit 4 of the shuttle 3, is generated, when the shuttle 3 is moved close to the conveying means - e.g. at the change over from the first stator segment 21 to the conventional transport device 5. The shuttle 3 then will interact with conveying means 7 due to that magnetic attraction force F_{A} generated. The shuttle 3 is linked to the conventional transport device 5 and the conveying means 7 by the magnetic attraction force F_{A}. I.e., that the shuttle 3 interacts with the conveying means 7 and adapts to the movement of the conveying means 7 (e.g., speed, acceleration, deacceleration, direction M of movement, etc.) due to the magnetic attraction force F_{A}. Thus, the safety functions of conventional transport device 5, implemented or integrated in the drive unit 6, can also be applied to the shuttle 3 and the energy deliverable by the shuttle 3 is limited. Safe motion functionality is thus provided to the shuttle 3 and the shuttle 3 also meets the predefined safety requirements, which ensure safe operation and make user interaction with the shuttle 3 possible during the operation of the electromagnetic transport system 1.

### Reference signs

- 1: Electromagnetic transport system
- 2: Stator
- 21, 22, 2i: Stator segment
- 3, 3i: Shuttle
- 4, 4i: Magnet unit
- 5, 5i: Conventional transport device
- 6: Drive unit
- 61: Drive element
- 62: Motor unit
- 63: Control unit
- 7: Conveying means, conveyor
- 8: Ferromagnetic material
- 9: Route-guiding element
- 10: Guiding element
- 11: Gap between shuttle and conveying means
- F_{F}: Friction
- F_{A}: Magnetic attraction force
- T: Direction of movement of the shuttles
- M: Direction of movement of the conveying means
- R: Rotatory motion

## Claims

1. Electromagnetic transport system (1) with a stationary part or a stator (2) consisting of at least two or more stator segments (21, 22, 2i) and with at least one moveable part or shuttle (3, 3i), which is moveable relative to the stator (2) along a transport path, wherein a magnet unit (4, 4i) is arranged on the at least one shuttle (3, 3i), and wherein the magnet unit (4, 4i) of the at least one shuttle (3, 3i) interacts electromagnetically with magnetic elements arranged on the stator (2) to move the shuttle (3, 3i) in at least one direction (T) of movement along the transport path, ***characterized in that*** the transport system (1) comprises at least one conventional transport device (5, 5i) replacing at least one of stator segments (2i) along the transport path, ***in that*** the at least one conventional transport device (5, 5i) at least comprises a drive unit (6) and conveying means (7), wherein the drive unit (6) drives and controls the conveying means (7) using safety functions to meet predefined safety requirements, ***and in that**,* wherever the conventional transport device (5, 5i) replaces at least one stator segment (2i), the at least one shuttle (3) interacts with the conveying means (7) in such a way that the at least one shuttle (3) is moved along with a movement of the conveying means (7), whereby the safety functions can be applied to the at least one shuttle (3).

2. Electromagnetic transport system (1) according to claim 1, ***characterized in that*** the conveying means (7) of the conventional transport device (5) comprises ferromagnetic material (8), which interacts with the magnet unit (4) of the at least one shuttle (3) to generate a magnetic attraction force (F_{A}).

3. Electromagnetic transport system according to claim 1 or claim 2, ***characterized in that*** the at least one shuttle (3) interacts with the conveying means (7) due to friction (F_{F}) and/or the magnetic attraction force (F_{A}) generated between the ferromagnetic material (8) and the magnet unit (4) of the at least one shuttle (3).

4. Electromagnetic transport system according to claim 2, ***characterized in that*** the at least one shuttle (3) interacts with the conveying means (7) only due to the magnetic attraction force (F_{A}) generated between the ferromagnetic material (8) and the magnet unit (4) of the at least one shuttle (3).

5. Electromagnetic transport system (1) according to one of the claims 1 to 4, ***characterized in that*** the conventional transport device (5, 5i) is designed as a continuous conveyor.

6. Electromagnetic transport system (1) according to one of the claims 1 to 5, ***characterized in that*** the conveying means (7) is designed as conveyor belt or conveyor chain, in particular as modular conveyor belt or conveyor chain made of plastic.

7. Electromagnetic transport system (1) according to one of the claims 1 to 6, ***characterized in that*** the safety functions fulfill safety requirements specified in the international IEC 61508 series of standard.

8. Electromagnetic transport system (1) according to one of the claims 1 to 7, ***characterized in that*** the safety functions implemented in the drive unit (6) of the conventional transport device (5, 5i) comprises safety functions specified in the standard IEC 61800-5-2:2016 including at least safety functions like as Safe Torque Off, Safe Limited Speed, Safe Direction, Safe Limited Torque and Safe Limited Acceleration.

9. Electromagnetic transport system (1) according to one of the claims 1 to 8, ***characterized in that*** the electromagnetic transport system (1) is designed as a long stator linear motor and/or planar motor.
